(19)

Europäisches
Patentamt
European
Patent Office
Office européen
des brevets

(11) **EP 1 870 768 A1**

(12) **EUROPEAN PATENT APPLICATION**
published in accordance with Art. 153(4) EPC

(43) Date of publication:
**26.12.2007 Bulletin 2007/52**

(51) Int Cl.:
*G02F 1/167* (2006.01)       *G02F 1/17* (2006.01)
*G09F 9/30* (2006.01)       *G09F 9/37* (2006.01)

(21) Application number: **06731575.4**

(22) Date of filing: **11.04.2006**

(86) International application number:
**PCT/JP2006/307628**

(87) International publication number:
**WO 2006/112299 (26.10.2006 Gazette 2006/43)**

(84) Designated Contracting States:
**DE FR**

(30) Priority: **13.04.2005 JP 2005115740**

(71) Applicant: **Bridgestone Corporation**
**Tokyo 104-8340 (JP)**

(72) Inventors:
• **HIRAOKA, Hidetoshi,**
**BRIDGESTONE CORPORATION**
**Kodaira-shi, Tokyo 187-8531 (JP)**

• **SAKURAI, Ryo,**
**BRIDGESTONE CORPORATION**
**Kodaira-shi, Tokyo 18-78531 (JP)**

(74) Representative: **Whalley, Kevin**
**Marks & Clerk**
**90 Long Acre**
**London WC2E 9RA (GB)**

(54)    **PANEL FOR INFORMATION DISPLAY**

(57)    In an information display panel, in which display media are sealed in a plurality of cells formed by partition walls between two opposed substrates, at least one of two substrates being transparent, and, in which the display media, to which an electrostatic field is applied, are made to move so as to display information such as an image, a tensile elastic modulus of the partition wall is controlled in a range of 10-100 MPa and a breaking elongation of the partition wall is controlled in a range of 2-500 %.

*FIG. 1*

EP 1 870 768 A1

**Description**

TECHNICAL FIELD

The present invention relates to an information display panel, in which display media are sealed in a plurality of cells formed by partition walls between two opposed substrates, at least one of two substrates being transparent, and, in which the display media, to which an electrostatic field is applied, are made to move so as to display information such as an image.

RELATED ART

As an information display device substitutable for liquid crystal display (LCD), information display devices with the use of technology such as an electrophoresis method, an electro-chromic method, a thermal method, a dichroic-particles-rotary method and so on are proposed.

As for these information display devices, it is conceivable as inexpensive visual display device of the next generation from a merit having wide field of vision close to normal printed matter, having smaller consumption, or having a memory function, as compared with LCD, and spreading out to a display for portable device and an electronic paper is expected. Recently, electrophoresis method is proposed that microencapsulate dispersion liquid made up with dispersion particles and coloration solution and dispose the liquid between faced substrates, and also it is expected.

However, in the electrophoresis method, there is a problem that a response rate is slow by the reason of viscosity resistance because the particles migrate among the electrophoresis solution. Further, there is a problem of lacking imaging repetition stability, because particles with high specific gravity of titanium oxide is scattered within solution of low specific gravity, it is easy to subside, difficult to maintain a stability of dispersion state. Even in the case of microencapsulating, cell size is diminished to a microcapsule level in order to make it hard to appear, however, an essential problem was not overcome at all.

Besides the electrophoresis method using behavior in the solution, recently, a method wherein electro-conductive particles and a charge transport layer are installed in a part of the substrate without using solution is proposed. [The Imaging Society of Japan "Japan Hardcopy '99" (July 21-23, 1999) Transaction Pages 249-252] However, there are some problems on this method: such that a construction becomes complicated since it is necessary to provide the charge transport layer, further a charge generation layer; and such that a display stability is deteriorated since it is difficult to constantly inject a charge in a conductive particle.

As one method for solving various problems mentioned above, there is known an information display panel, in which display media are sealed in a plurality of cells formed by partition walls between two opposed substrates, at least one of two substrates being transparent, and, in which the display media, to which an electrostatic field is applied, are made to move so as to display information such as an image.

In the information display panel mentioned above, physical properties of the partition wall are not particularly considered. However, there is a drawback such that, in the case of applying a bending force to the panel, a crack is generated in the partition wall and the partition wall is detached from the substrate, if the partition wall is too hard. On the other hand, there is a drawback such that a gap between two substrates is not properly maintained and a thin width of the partition wall is difficult to generate, if the partition wall is too soft.

DISCLOSURE OF THE INVENTION

The present invention has for its object to eliminate the drawbacks mentioned above and to provide an information display panel, which can prevent a crack generation in the partition wall and a partition wall detachment from the substrate, and, which can maintain a gap between two substrates properly and generate a thin width of the partition wall easily.

According to the invention, an information display panel, in which display media are sealed in a plurality of cells formed by partition walls between two opposed substrates, at least one of two substrates being transparent, and, in which the display media, to which an electrostatic field is applied, are made to move so as to display information such as an image, is characterized in that a tensile elastic modulus of the partition wall is controlled in a range of 10-100 MPa and a breaking elongation of the partition wall is controlled in a range of 2-500%.

Moreover, as a preferred embodiment of the image display panel according to the invention, there are cases: such that the substrate is made of resin; and such that a tensile elastic modulus of the partition wall is controlled in a range of 20-60 MPa and a breaking elongation of the partition wall is controlled in a range of 2-200 %.

According to the information display panel of the present invention, since, as the physical properties of the partition wall, it is possible to prevent a crack generation in the partition wall and a partition wall detachment from the substrate, and, also it is possible to maintain a gap between two substrates properly and to generate a thin width of the partition wall easily.

BRIEF DESCRIPTION OF THE DRAWINGS

[Fig. 1] Fig. 1 is a schematic view showing one embodiment of the information display panel according to the invention.
[Fig. 2] Fig. 2 is a schematic view illustrating another embodiment of the information display panel according to the invention.
[Fig. 3] Fig. 3 is a schematic view depicting still another embodiment of the information display panel according to the invention.
[Fig. 4] Fig. 4 is a schematic view showing one embodiment of partition shapes in the information display panel according to the invention.
[Fig. 5] Fig. 5 is a schematic view for explaining a method for measuring a tensile elastic modulus and a breaking elongation of the partition wall in the examples.
[Fig. 6] Fig. 6 is a schematic view for explaining a sample construction of the information display panel in the examples.
[Fig. 7] Fig. 7 is a schematic view for explaining a press test manner in the examples.
[Fig. 8] Fig. 8 is a schematic view for explaining a bending test manner in the examples.

BEST MODE FOR CARRYING OUT THE INVENTION

At first, a basic construction of an information display panel using the display media constituted by the particles for display media according to the invention will be explained. In the information display panel using the particles according to the invention, an electrostatic field is applied to the display media sealed between opposed two substrates. Along a direction of the applied electrostatic field, charged display media are attracted by means of a force due to electrostatic field or Coulomb's force, and, the display media are moved reciprocally by varying a direction of the electrostatic field due to a potential switching, so that information such as an image can be displayed. Therefore, it is necessary to design the information display panel in such a manner that the display media can move evenly and maintain stability during a reciprocal operation or during a display information reserving state. Here, as to forces applied to the particles constituting the display media, there are an attraction force between the particles due to Coulomb' force, an imaging force with respect to the electrode or the substrate, an intermolecular force, a liquid bonding force and a gravity.

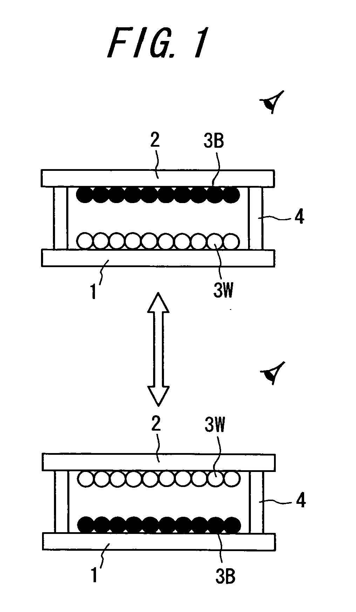

Examples of the information display panel according to the invention will be explained with reference to Fig. 1 - Fig. 3.

In the example shown in Fig. 1, at least two or more groups of display media having different optical reflectance and different charge characteristics and comprising at least one or more groups of particles (here, white color display media 3W constituted by the particles made of the particles and black color display media 3B constituted by the particles are shown) are sealed between the substrate 1 and the substrate 2 and moved in a perpendicular direction with respect to substrates 1 and 2, in accordance with an electric field generated between the substrates by means of some kind of voltage apply means, so as to display a black color by viewing the black color display media 3B to an observer or so as to display a white color by viewing the white color display media 3W to the observer. In the example shown in Fig. 1, a cell is formed by arranging for example grid-like partition walls 4 between the substrates 1 and 2 (in Fig. 1, the partition walls arranged at the near side are omitted).

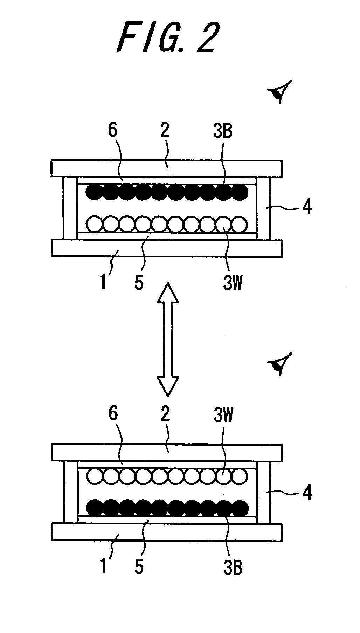

In the example shown in Fig. 2, at least two or more groups of display media having different colors and different charge characteristics and comprising at least one or more groups of particles (here, white color display media 3W constituted by the particles and black color display media 3B constituted by the particles are shown) are moved in a perpendicular direction with respect to substrates 1 and 2, in accordance with an electric field generated by applying a voltage between an electrode 5 arranged to the substrate 1 and an electrode 6 arranged to the substrate 2, so as to display a black color by viewing the black color display media 3B to an observer or so as to display a white color by viewing the white color display media 3W to the observer. In the example shown in Fig. 2, a cell is formed by arranging for example grid-like partition walls 4 between the substrates 1 and 2 (in Fig. 2, the partition walls arranged at the near side are omitted).

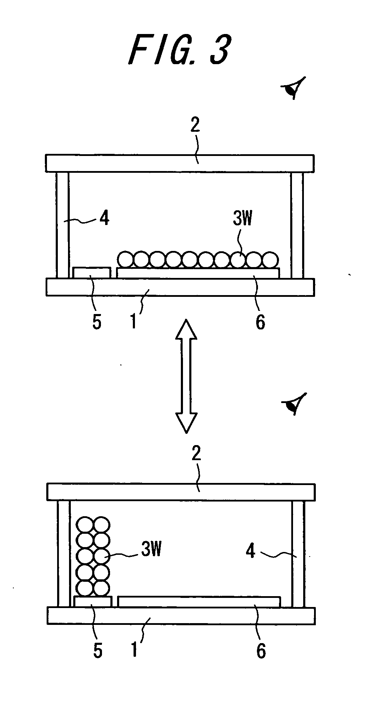

In the example shown in Fig. 3, one group of display media having one color and one charge characteristic and comprising at least one or more groups of particles (here, white color display media 3W constituted by the particles are shown) is moved in a parallel direction with respect to substrates 1 and 2, in accordance with an electric field generated by applying a voltage between the electrode 5 arranged to the substrate 1 and the electrode 6 arranged to the substrate 1, so as to display a white color by viewing the white color display media 3W to an observer or so as to display a color of the electrode 6 or the substrate 1 by viewing a color of the electrode 6 or the substrate 1 to the observer. In the example shown in Fig. 3, a cell is formed by arranging for example grid-like partition walls 4 between the substrates 1 and 2 (in Fig. 3, the partition walls arranged at the near side are omitted).

The electrodes may be arranged outside of the substrate or may be embedded in the substratrate.

The above explanations can be applied to a case such that the white color particles 3W are substituted by white color liquid powders or a case such that the black color particles 3B are substituted by black color liquid powders.

In the information display panel mentioned above, a feature of the present invention is that a tensile elastic modulus of the partition wall is controlled in a range of 10-100 MPa (preferably 20-60 MPa) and a breaking elongation of the partition wall is controlled in a range of 2-500 % (preferably 2-200 %).

The reason for limiting a tensile elastic modulus and a breaking elongation of the partition wall is as follows. At first, as to the tensile elastic modulus, if it exceeds 100 MPa, a crack and a detachment and so on easily occur due to a stress generated by a bending and so on, and also, if it is less than 10 MPa, it is difficult to achieve a thin width of the partition wall and to maintain a proper gap between the substrates. Then, as to the breaking elongation, if it exceeds 500 %, it is difficult to achieve a thin width of the partition wall and to maintain a proper gap between the substrates, and also, if it is less than 2 %, a crack and a detachment and so on easily occur due to a stress generated by a bending and so on.

Moreover, in the information display panel according to the invention, the physical properties of the partition wall are defined. This physical property definition of the partition wall according to the invention can be preferably applied if the substrate is constructed by resin. As a material preferably used for the substrate, use is made of polymer material. As one example of polymer material, use is made of polyester, polyester, polyethylene naphthalate, polyether sulphone, polyimide, polycarbonate, polyurethane, and so on. Moreover, according to need, use may be made of a complex resin substrate in which fillers are mixed in the polymer materials mentioned above. In an actual substrates, as the substrate at a display side or at a near side, a transparent material and an opaque material are suitably selected for constituting the substrate as usage.

Hereinafter, respective members constituting the information display panel according to the invention will be explained.

As the substrate, at least one of the substrates is the transparent substrate through which a color of the display media can be observed from outside of the panel, and it is preferred to use a material having a high transmission factor of visible light and an excellent heat resistance. The other substrate may be transparent or may be opaque. Examples of the substrate material include polymer sheets such as polyethylene terephthalate, polyethylene naphthalate, polyether sulfone, polyethylene, polycarbonate, polyimide or acryl and metal sheets having flexibility and inorganic sheets such as glass, quartz or so having no flexibility. The thickness of the substrate is preferably 2 to 5000$\mu$ m, more preferably 5 to 2000 $\mu$m. When the thickness is too thin, it becomes difficult to maintain strength and distance uniformity between the substrates, and when the thickness is thicker than 5000 $\mu$m, there is a drawback as a thin-type information display panel.

As a material of the electrode in case of arranging the electrode in the information display panel, use is made of metals such as aluminum, silver, nickel, copper, gold, or, conductive metal oxides such as indium tin oxide (ITO), indium oxide, conductive tin oxide, antimony tin oxide (ATO), conductive zinc oxide and so on, or, conductive polymers such as polyaniline, polypyrrole, polythiophene and so on, and they are used by being suitably selected. As an electrode forming method, use is made of a method in which the materials mentioned above are made to a thin film by means of sputtering method, vacuum vapor deposition method, CVD (chemical vapor deposition) method, coating method and so on, or, a method in which conductive materials and solvents are mixed with synthetic resin binder and the mixture is sprayed to perform pattering. A transparency is necessary for the electrode arranged to the substrate at an observation side, but it is not necessary for the electrode arranged to the substrate at a rear side. In both cases, the materials mentioned above, which are transparent and have a pattern formation capability, can be suitably used. Additionally, the thickness of the electrode may be suitable unless the electroconductivity is absent or any hindrance exists in optical transparency, and it is preferable to be 3 to 1000 nm, more preferable to be 5 to 400 nm. The material and the thickness of the electrode arranged to the rear substrate are the same as those of the electrode arranged to the substrate at the display side, but transparency is not necessary. In this case, the applied outer voltage may be superimposed with a direct current or an alternate current.

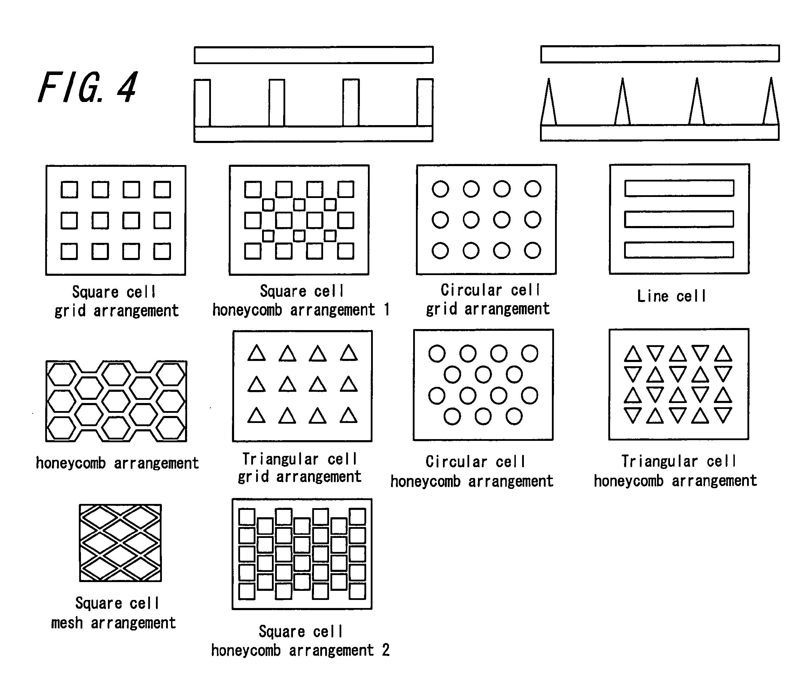

As the partition wall 4 arranged to the substrate, a shape of the partition wall is suitably designed in accordance with a kind of the display media used for the display and is not restricted. However, it is preferred to set a width of the partition wall to 2 - 100 $\mu$m more preferably 3-50 $\mu$m and to set a height of the partition wall to 10 - 500 $\mu$m more preferably 10 - 200 $\mu$m. The cell formed by the partition walls each made of rib has a square shape, a triangular shape, a line shape, a circular shape and a hexagon shape, and has an arrangement such as a grid, a honeycomb and a mesh, as shown in Fig. 4 viewed from a plane surface of the substrate. It is preferred that the portion corresponding to a cross section of the partition wall observed from the display side (an area of the frame portion of the cell) should be made as small as possible. In this case, a clearness of the image display can be improved.

Then, liquid powders used for example as display media in the information display panel according to the invention will be explained. It should be noted that a right of the name of liquid powders used in the information display panel according to the invention is granted to the applicant as "electric liquid powders" (Registerd): register No. 4636931.

In the present invention, a term "liquid powders" means an intermediate material having both of liquid properties and particle properties and exhibiting a self-fluidity without utilizing gas force and liquid force. Preferably, it is a material having an excellent fluidity such that there is no repose angle defining a fluidity of powder. For example, a liquid crystal is defined as an intermediate phase between a liquid and a solid, and has a fluidity showing a liquid characteristic and an anisotropy (optical property) showing a solid characteristic (Heibonsha Ltd.: encyclopedia). On the other hand, a definition of the particle is a material having a finite mass if it is vanishingly small and receives an attraction of gravity (Maruzen Co., Ltd.: physics subject-book). Here, even in the particles, there are special states such as gas-solid fluidized body and liquid-solid fluidized body. If a gas is flown from a bottom plate to the particles, an upper force is acted with respect to the particles in response to a gas speed. In this case, the gas-solid fluidized body means a state that is easily fluidized when the upper force is balanced with the gravity. In the same manner, the liquid-solid fluidized body means a state that is fluidized by a liquid. (Heibonsha Ltd.: encyclopedia) In the present invention, it is found that the intermediate material having both of fluid properties and solid properties and exhibiting a self-fluidity without utilizing gas force and liquid force can be produced specifically, and this is defined as the liquid powders.

That is, as is the same as the definition of the liquid crystal (intermediate phase between a liquid and a solid), the liquid powders according to the invention are a material showing the intermediate state having both of liquid properties and particle properties, which is extremely difficult to receive an influence of the gravity showing the particle properties mentioned above and indicates a high fluidity. Such a material can be obtained in an aerosol state i.e. in a dispersion system wherein a solid-like or a liquid-like material is floating in a relatively stable manner as a dispersant in a gas, and thus, in the information display device according to the invention, a solid material is used as a dispersant.

The information display panel has a construction such that the liquid powders composed of a solid material stably floating as a dispersoid in a gas and exhibiting a high fluidity in an aerosol state are sealed between opposed two substrates, wherein one of two substrates is transparent. Such liquid powders can be made to move easily and stably by means of Coulomb's force and so on generated by applying a low voltage.

As mentioned above, the liquid powders means an intermediate material having both of liquid properties and particle properties and exhibiting a self-fluidity without utilizing gas force and liquid force. Such liquid powders become particularly an aerosol state. In the information display device according to the invention, the liquid powders used in a state such that a solid material is relatively and stably floating as a dispersoid in a gas.

Then, the particles for the display media (hereinafter, called sometimes as particles) constituting the display media used in the information display panel according to the invention will be explained. The particles for the display media may be used as the display media constituted by the particles only, or, as the display media constituted by mixing various groups of the particles, or, as the display media constituted by the liquid powders obtained by controlling and mixing the particles. The particle may be composed of resins as a main ingredient, and can include according to need charge control agents, coloring agent, inorganic additives and so on as is the same as the known one. Hereinafter, typical examples of resin, charge control agent, coloring agent, additive and so on will be explained.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds and colors of organic or inorganic pigments or dye as will be described below are employable.

Examples of black pigments include carbon black, copper oxide, manganese dioxide, aniline black, and activate carbon.

Examples of blue pigments include C.I. pigment blue 15:3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, and C.I. pigment yellow 12. Examples of green pigments include chrome green, chromium oxide, pigment green B, C.I. pigment green 7,Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent.

By mixing the coloring agents mentioned above, it is possible to produce a particle for display media having a suitable color.

Moreover, as the particle diameter of the particles for display media, it is preferred to set an average particle diameter to 1 - 20 $\mu$m and to use even particles. If the average particle diameter exceeds this range, the image clearness sometimes deteriorated, and, if the particle diameter is smaller than this range, an agglutination force between the particles becomes too large and the movement of the particles is prevented.

Further, it is preferred that particle diameter distribution Span of the particles for display media, which is defined by the following formula, is less 5 preferably less than 3:

$$\mathrm{Span} = (\mathrm{d}(0.9) - \mathrm{d}(0.1))/\mathrm{d}(0.5) ;$$

(here, d(0.5) means a value of the particle diameter expressed by $\mu$m wherein an amount of the particles having the particle diameter larger than or smaller than this value is 50%, d(0.1) means a value of the particle diameter expressed by $\mu$m wherein an amount of the particles having the particle diameter smaller than this value is 10%, and d(0.9) means a value of the particle diameter expressed by $\mu$m wherein an amount of the particles having the particle diameter smaller than this value is 90%).

If the particle diameter distribution Span is set to not more than 5, the particle diameter becomes even and it is possible to perform an even particle movement.

Furthermore, as a correlation between the particles for display media, it is preferred to set a ratio of d(0.5) of the particles having smallest diameter with respect to d(0.5) of the particles having largest diameter to not more than 50 preferably not more than 10. The particles having different charge characteristics with each other are moved reversely, even if the particle diameter distribution Span is made smaller. Therefore, it is preferred that the particle sizes of the particles are made to be even with each other, and same amounts of the particles are easily moved in a reverse direction, and thus that is this range.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution. In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

A charge amount of the display media properly depends upon the measuring condition. However, it is understood that the charge amount of the display media used for the display media in the information display panel substantially depends upon an initial charge amount, a contact with respect to the partition wall, a contact with respect to the substrate, a charge decay due to an elapsed time, and specifically a saturation value of the particles for the display media during a charge behavior is a main factor.

After various investigations of the inventors, it is fond that an adequate range of the charged values of the particles for the display media can be estimated by performing a blow-off method utilizing the same carrier particles so as to measure the charge amount of the particles for the display media.

Further, in the dry-type information display panel in which the display media constituted by the particles for display media are driven in an air space, it is important to control a gas in a gap surrounding the display media between the substrates, and a suitable gas control contributes an improvement of display stability. Specifically, it is important to control a humidity of the gap gas to not more than 60% RH at 25°C, preferably not more than 50% RH.

The above gap means a gas portion surrounding the display media obtained by substituting the electrodes 5, 6 (in the case of arranging electrode inside of substrate), an occupied portion of the display media 3 (particles or liquid powders), an occupied portion of the partition walls 4 and a seal portion of the device from the space between the substrate 1 and the substrate 2 for example in Fig. 1. A kind of the gap gas is not limited if it has the humidity mentioned above, but it is preferred to use dry air, dry nitrogen gas, dry argon gas, dry helium gas, dry carbon dioxide gas, dry methane gas and so on. It is necessary to seal this gas in the information display panel so as to maintain the humidity mentioned above. For example, it is important to perform the operations of filling the display media and assembling the substrate under an atmosphere having a predetermined humidity and to apply a seal member and a seal method for preventing a humidity inclusion from outside of the device.

In the information display panel according to the invention, an interval between the substrates is not restricted if the display media can be moved and a contrast can be maintained, and it is adjusted normally to 10 - 500 $\mu$m, preferably 10 - 200 $\mu$m.

Moreover, it is preferred to control a volume occupied rate of the display media in a space between the opposed substrates to 5 - 70 %, more preferably 5 - 60 %. If the volume occupied rate of the display media exceeds 70 %, the display media become difficult to move, and if it is less than 5 %, a sufficient contrast cannot be obtained and a clear image display is not performed.

EXAMPLES

Hereinafter, the present invention will be explained further specifically with reference to the examples according to the invention and the comparative examples, but the present invention is not limited to the following

examples.

In order to consider the information display panels using the partition walls having various tensile elastic modulus and various breaking elongations, the following examination was performed.

<Estimation of tensile elastic modulus and breaking elongation of partition wall>

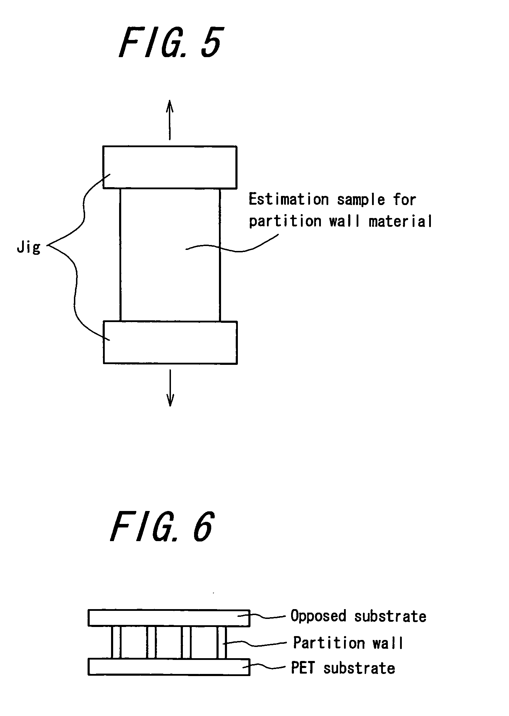

At first, a material constituting the partition wall was cut-out to obtain a specimen having a width of 10 mm and a length of 70 mm, and the specimen was exposed (1000 mJ/cm$^2$) and baked (160 °C, 1 hour) to obtain an estimation sample. As shown in Fig. 5, by using a rheometer RT-3010D-CW (product of rheotech co., ltd.), the estimation sample was chucked by a jig of tensile testing machine in such a manner that both ends of the estimation sample were chucked by 10 mm respectively, so as to perform a tensile test. From the results of the tensile test, a tensile elastic modulus and a breaking elongation were obtained.

<Preparation of information display panel>

At first, as shown in Fig. 6, a honeycomb structure with an opening rate of 90 % was formed by arranging the partition wall having a height of 40 $\mu$m and a width of 15 $\mu$m to a PET substrate having a thickness of 125 $\mu$m and 125 $\mu$m square. Then, the honeycomb structure was connected to the opposed substrate to obtain a sample. As a sample, as shown in the following Table 1, various samples were prepared by using the partition walls having properties of a combination between various tensile elastic modulus and various breaking elongations.

<Estimation of information display panel>

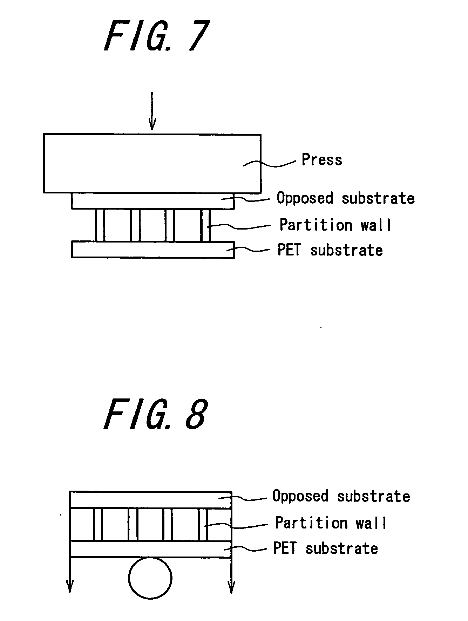

With respect to the thus prepared samples, a pressing test and a bending test were performed so as to estimate a sample state. At first, as shown in Fig. 7, the estimation by the pressing test was performed by: applying a load of 1.0 ton to the sample; maintaining under pressure for 30 minutes; unloading the load; and observing an appearance of the partition wall by a microscope. Moreover, as shown in Fig. 8, the estimation by the bending test was performed by: pressing the sample to a cylinder having a diameter of 20 mm; repeating by 10 times a bending step in which the sample was bended by an angle of 90°; and observing an appearance of the partition wall after a ten times repetition by a microscope. The results are shown in the following Table 1.

[Table 1]

| Tensile elastic modulus (MPa) | 150 | 100 | 70 | 50 | 10 | 4 | 1 |
|---|---|---|---|---|---|---|---|
| Breaking elongation (%) | 0.1 | 0.5 | 2 | 5 | 200 | 500 | 750 |
| Pressing test | Nothing peculiar | Nothing peculiar | Nothing peculiar | Nothing peculiar | Nothing peculiar | Partition wall distortion | Partition wall falling |
| Bending test | Detachment | Crack | Nothing peculiar | Nothing peculiar | Nothing peculiar | Partition wall falling | Partition wall falling |

From the results shown in Table 1, it is understood that, if the tensile elastic modulus of the partition wall is controlled in a range of 10-100 MPa and the breaking elongation of the partition wall is controlled in a range of 2-500 %, it is possible to obtain the information display panel having excellent results on the pressing test and on the bending test.

INDUSTRIAL APPLICABILITY

The information display panel according to the invention is applicable to the display unit for mobile equipment such as notebook personal computers, PDAs, cellular phones, handy terminal and so on; to the electric paper for electric book, electric newspaper and so on; to the bulletin boards such as signboards, posters, blackboards and so on; to the image display unit for electric calculator, home electric application products, auto supplies and so on; to the card display unit for point card, IC card and so on; and to the display unit for electric advertisement, information board, electric POP (Point Of Presence, Point Of Purchase advertising), electric price tag, electric shelf tag, electric musical score, RF-ID device and so on.

**Claims**

1. An information display panel, in which display media are sealed in a plurality of cells formed by partition walls between two opposed substrates, at least one of two substrates being transparent, and, in which the display media, to which an electrostatic field is applied, are made to move so as to display information such as an image, **characterized in that** a tensile elastic modulus of the partition wall is controlled in a range of 10-100 MPa and a breaking elongation of the partition wall is controlled in a range of 2-500 %.

2. The information display panel according to claim 1, wherein the substrate is made of resin.

3. The information display panel according to claim 1 or 2, wherein a tensile elastic modulus of the partition wall is controlled in a range of 20-60 MPa and a breaking elongation of the partition wall is controlled in a range of 2-200 %.

# FIG. 1

## FIG. 2

# FIG. 3

EP 1 870 768 A1

## FIG. 4

| | |
|---|---|

Square cell
grid arrangement

Square cell
honeycomb arrangement 1

Circular cell
grid arrangement

Line cell

honeycomb arrangement

Triangular cell
grid arrangement

Circular cell
honeycomb arrangement

Triangular cell
honeycomb arrangement

Square cell
mesh arrangement

Square cell
honeycomb arrangement 2

# FIG. 5

Estimation sample for
partition wall material

Jig

# FIG. 6

Opposed substrate
Partition wall
PET substrate

# FIG. 7

Press

Opposed substrate

Partition wall

PET substrate

# FIG. 8

Opposed substrate

Partition wall

PET substrate

## INTERNATIONAL SEARCH REPORT

| | International application No. |
|---|---|
| | PCT/JP2006/307628 |

A.  CLASSIFICATION OF SUBJECT MATTER
*G02F1/167*(2006.01), *G02F1/17*(2006.01), *G09F9/30*(2006.01), *G09F9/37* (2006.01)

According to International Patent Classification (IPC) or to both national classification and IPC

B.  FIELDS SEARCHED

Minimum documentation searched (classification system followed by classification symbols)
*G02F1/167*(2006.01), *G02F1/17*(2006.01), *G09F9/30*(2006.01), *G09F9/37* (2006.01)

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2003-202605 A  (Bridgestone Corp.), 18 July, 2003 (18.07.03), Par. Nos. [0009] to [0022] & US 2005-1810 A1        & EP 1429178 A1 & WO 2003/27764 A1 | 1-3 |
| Y | JP 2003-241236 A  (The Pilot Ink Co., Ltd.), 27 August, 2003 (27.08.03), Par. Nos. [0010] to [0039] (Family: none) | 1-3 |

☐  Further documents are listed in the continuation of Box C.          ☐  See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 09 May, 2006 (09.05.06) | 16 May, 2006 (16.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 870 768 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Japan Hardcopy '99,* 21 July 1999, 249-252